# EUROPEAN PATENT APPLICATION

(11) **EP 3 812 754 A1**
(43) Date of publication of application: **28.04.2021**
(21) Application number: 19306388.0
(22) Date of filing: 25.10.2019
(51) Int. Cl.: G01N 27/04, G01N 27/22

(54) **INORGANIC HUMIDITY SENSOR DEVICE**

(71) Applicant: MEAS France, 31027 Toulouse Cedex 3 (FR)
(72) Inventor: Durupt, Emilien, 31460 Francarville (FR); Andreu, Damien, 31400 Toulouse (FR)
(74) Representative: Grünecker Patent- und Rechtsanwälte PartG mbB

(57) **Abstract**

The present invention relates to a humidity sensor device, comprising a substrate and at least a pair of interdigitated electrodes formed over the inorganic dielectric layer.

## Description

### Field of Invention

The present invention relates to a humidity sensor device for sensing the absolute or relative humidity of an environment and the manufacture of such an inorganic humidity sensor.

### Background of the invention

Temperature sensors, humidity sensors, optical sensors or a combination thereof are known to be used in windshield sensing devices installed in vehicles for the purpose of automatically controlling the heating, ventilation, air conditioning and operation of the windshield wiper. As an example, a windshield humidity sensing device is commonly used for preventing fogging conditions and for wiper control.

In the art, a humidity sensor device is known that comprises a dielectric substrate, two electrodes formed on the dielectric substrate and a sensitive polymeric layer for absorption and/or adsorption of water formed on the two electrodes. A variation of capacitance, resistivity or impedance caused by the absorption and/or adsorption of water can be measured and used for the determination of the (relative) humidity of an environment under the assumption that the water amount detected by the sensor is in thermal equilibrium with the gaseous fraction of water in the environment.

However, the organic polymer material suffers from degradation during lifetime and is affected by relatively high temperatures that, for example, arise during the process of manufacturing of the sensor device or in-the-field operation in particular applications. Particularly, the relatively low glass transitions temperature of polymeric materials pose problems during reflow processing of the dies. Moreover, the overall manufacturing process comprising the formation of inorganic and organic material layers is relatively complex. Additionally, response times of conventional polymeric humidity sensor devices are relatively low (of the order of seconds).

In view of the above, it is an object of the present invention to provide a humidity sensor device allows for a fast, reliable and permanent sensing operation and that can be manufactured relatively easily.

### Description of the Invention

The present invention addresses the above-mentioned object by providing a humidity sensor device, comprising a substrate and at least a pair of interdigitated electrodes formed over the substrate.

The substrate may be a semiconductor bulk substrate or an insulating substrate, for example, a ceramic substrate. Alternatively, a semiconductor microcircuit (wafer), for example, an ASIC or ASSP, may be used as the substrate.

If a semiconductor bulk substrate or a semiconductor microcircuit is used for the substrate, an inorganic dielectric (insulating) layer may be formed on the substrate and the interdigitated electrodes may be formed on or over the inorganic dielectric layer. In this case, the inorganic dielectric layer may serve as a sensing layer and exhibits a well-defined adsorption/absorption rate for water. No organic material is comprised in the device.

The thus provided configuration can be easily produced by mass production semiconductor manufacturing processes. Using microfabrication the assembly of the various parts is simplified and alignment can be achieved within the tight limits of microfabrication in contrast to a mechanical assembly like in the prior art. It can be manufactured at compact sizes and does not heavily suffer from severe deteriorations due to aging during its lifetime. The device can be manufactured and operate at relatively high temperatures up to about 300 °C, for example, or up to 1000 °C or even higher. Moreover, based on such a configuration a response time of less than a second can be achieved.

By an appropriate circuitry the amount of water absorbed/adsorbed by the inorganic dielectric layer or insulating substrate can be determined and based on the determined amount of water the humidity or relative humidity of an environment can be determined given that the temperature of the environment is known. The temperature of the environment can be determined by means of a temperature sensor that may be comprises in the humidity sensor device.

In particular, an environmental (relative) humidity can be sensed by measuring the resistance or impedance of the inorganic dielectric layer or insulating substrate in a region between the interdigitated electrodes. Alternatively or additionally, the capacitance of the capacitor formed by the pair of interdigitated electrodes and the material of the inorganic dielectric layer or insulating substrate between the interdigitated electrodes or the current flowing in the inorganic dielectric layer between the interdigitated electrodes when voltages are applied to the electrodes can be measured. The measurement can be made by an appropriate sensing circuitry comprised in the humidity sensor device.

The semiconductor bulk substrate can be made of or comprise (poly)silicon. A sapphire substrate or any other substrate suitable for microfabrication production lines can alternatively be used. The inorganic dielectric layer can be made of or comprise a nitride material, in particular, Si₃N₄ or silicon carbide. The interdigitated electrodes can be made of or comprise a noble metal, in particular, gold, platinum. Alternative materials that are suitable for manufacturing the electrodes include aluminum and copper. An adhesion layer (made of chromium, for example) that insures a stable adhesion of the electrodes on the substrate can also be deployed.

In the above-described examples, the electrodes of the pair of interdigitated electrodes may be arranged in the same horizontal plane parallel to the inorganic dielectric layer. In fact, they may be made from the same layer and terminate in electrode terminals that may also be formed from the same layer.

The above-mentioned object is also addressed by providing a method of manufacturing a humidity sensor device, comprising the steps of:
providing a substrate, for example, a (poly)silicon substrate; and
forming at least a pair of interdigitated electrodes, for example, made of gold, over the substrate.

Again, the substrate may be a semiconductor bulk substrate or an insulating substrate, for example, a ceramic substrate. Alternatively, a semiconductor microcircuit (for example, an ASIC or ASSP) may be used as the substrate.

The method may comprise forming an inorganic dielectric layer, for example, an Si₃N₄ layer, on the substrate, if the substrate is provided in the form of a semiconductor bulk substrate or semiconductor microcircuit. In this case, the inorganic dielectric layer may serve as a sensing layer that is intrinsically absorbing/adsorbing water. No layer of any organic material has to be formed during the entire process of manufacturing the humidity sensor device.

The method may further comprise forming an adhesion layer, for example, a Cr layer, on the inorganic dielectric layer. In this case, the pair of interdigitated electrodes is formed on the adhesion layer that facilitates the formation of an electrode layer from which the electrodes are patterned.

According to an embodiment the forming of the pair of interdigitated electrodes comprises
forming an electrode layer over the inorganic dielectric layer, particularly, on the above-mentioned adhesion layer;
forming a photoresist layer over the electrode layer;
providing a photolithography mask;
providing an exposure light source;
patterning the photoresist layer by means of the photolithography mask and the exposure light source to obtain a patterned photoresist; and
patterning, for example, by reactive ion etching, the electrode layer by means of the patterned photoresist.

The patterning of the electrode layer may comprise forming an electrode terminal for each of the electrodes of the pair of interdigitated electrodes, respectively. The electrode layer may be formed by vapour deposition, for example.

Further, the method may comprise wire bonding the electrode terminals to a printed circuit board. The printed circuit board may comprise a sensing circuit configured for measuring at least one of a resistance of the inorganic dielectric layer, impedance of the inorganic dielectric layer, capacity of the capacitor formed by the pair of interdigitated electrodes and the inorganic dielectric layer and current flowing through the inorganic dielectric layer.

Additionally, it is provided a humidity sensor device obtainable by the method according to one of the above-described embodiments of the inventive method of manufacturing a humidity sensor device.

It has to be noted that the thus provided humidity sensor device can be used as a stand-alone device for remote sensing in harsh environments characterized by high temperatures (of some 100 to some 1000 °C) and high pressures (for example, a few ten atm or more).

Additional features and advantages of the present invention will be described with reference to the drawings. In the description, reference is made to the accompanying figures that are meant to illustrate preferred embodiments of the invention. It is understood that such embodiments do not represent the full scope of the invention.
Figure 1 illustrates an exemplary embodiment of a humidity sensor device according to the present invention.
Figures 2a to 2g illustrate a flow chart of a process of manufacturing of a humidity sensor device according to an embodiment if the present invention, for example, the humidity sensor device shown in Figure 1.
Figure 3 illustrates experimental results for a current measurement by means of a configuration as shown in Figure 1.

The present invention provides an inorganic humidity sensor device that is, for example, suitable for sensing the (relative) humidity in the vicinity of a windshield of a vehicle. The provided humidity sensor device can be manufactured relatively easily by mass production semiconductor manufacturing techniques and, particularly, resists relatively high temperatures.

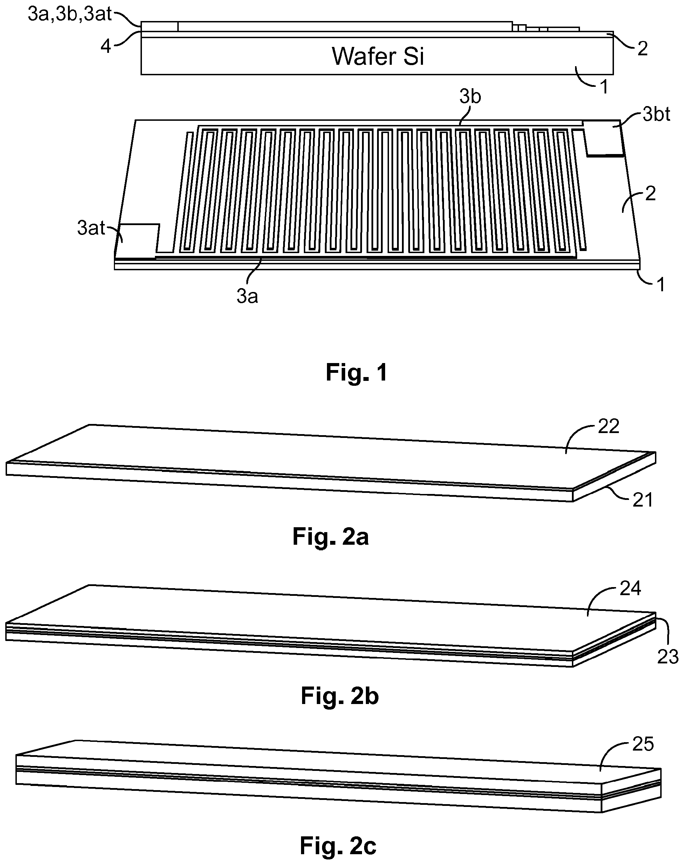

Figure 1 exemplarily shows an embodiment of a humidity sensor device 10 according to the invention. The humidity sensor device 10 comprises a semiconductor bulk substrate 1. The semiconductor bulk substrate 1 may be a (poly)silicon substrate.

An inorganic dielectric layer 2 serving as an adsorbing/absorbing sensing layer is formed on the semiconductor bulk substrate 1. The inorganic dielectric layer 2 may be a nitride layer, for example, an Si₃N₄ layer. A pair of interdigitated electrodes 3a, 3b is formed over the inorganic dielectric layer 2. Formation of the pair of interdigitated electrodes 3a, 3b over the inorganic dielectric layer 2 can be facilitated by means of an adhesion layer 4, for example, made of or comprising Cr, formed on the inorganic dielectric layer 2 (see top view of Figure 1).

Both electrodes 3a and 3b are formed in the same horizontal plane and they can be made of the same material. For example, the electrodes 3a, 3b can be made of or comprise a noble metal, in particular, gold, to provide for chemical resistance and durability. Voltages can be applied via the electrode terminals 3at and 3bt that can be made of the same material as the electrodes 3a and 3b. Moreover, a compact design with horizontal dimensions of the vertical multi-layer stack in the range of about 600 µm down to 300 µm, for example, can be realized.

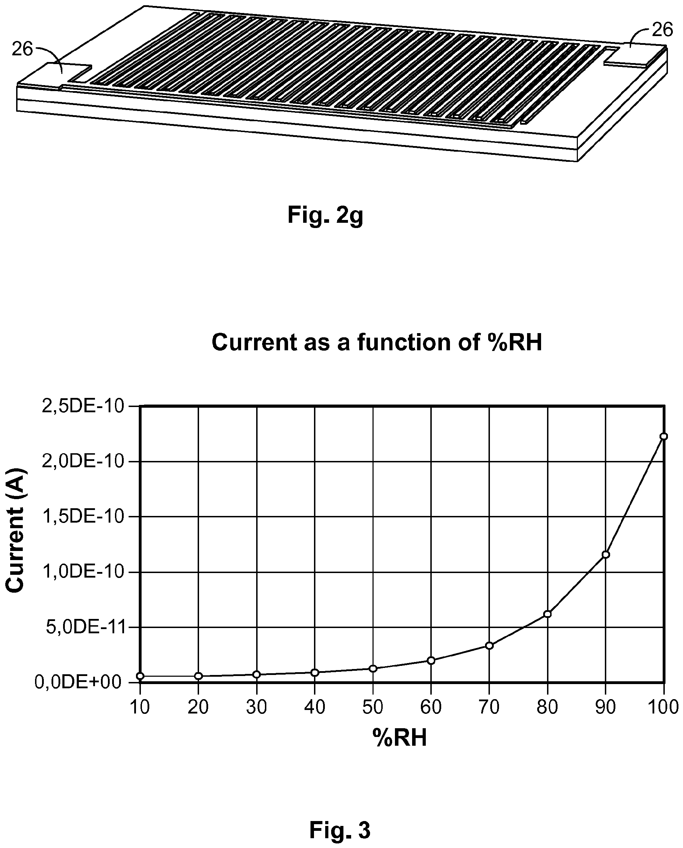

The configuration shown in Figure 1 allows for a sensitivity of the humidity sensor device 10 over the entire humidity range (0% to 100%) and sub-second response times. Figure 3 exemplarily shows experimental results for a measurement of a current flowing between the interdigitated electrodes 3a and 3b through the inorganic dielectric layer 2 as a function of the relative humidity giving rise to the adsorption of water in the inorganic dielectric layer 2.

The number of electrode teeth, the widths and lengths of the teeth as well as the pitches (distances between the teeth) can be adjusted to concrete applications. Exemplary ranges are 10nm and even below in the case of electronic lithography (according to the resolution of the microfabrication process chosen) to several tens of µm for the widths. The number of digits may be in a range between a few tens to several tens of thousands, their length ranging from a few tens of nm to several tens of µm going up to few mm.

A process of manufacturing a humidity sensor device according to an embodiment of the invention will now be described with reference to Figures 2a to 2g. For example, by the illustrated process flow the humidity sensor device 10 shown in Figure 1 can be produced.

As shown in Figure 2a a semiconductor bulk substrate 21, for example, an Si substrate, is provided and an inorganic dielectric layer 22, for example, an Si₃N₄, layer is formed, for example, grown, on the semiconductor bulk substrate 21. After the formation/grown of the inorganic dielectric layer 22 an adhesion layer 23, for example, a Cr layer, is formed on the inorganic dielectric layer 22 and an electrode layer 24, for example, an Au layer, is formed on the adhesion layer 23 (see Figure 2b). The electrode layer 24 may be formed by vapor deposition.

After formation of the electrode layer 24 a photoresist 25 is formed on the electrode layer 24 (see Figure 2c) for a subsequent photolithography processing. The photoresist 25 may be formed on the electrode layer 24 by spin coating. Further, the photoresist 25 may be a positive or negative photoresist made of a polymer or epoxy resin, for example.

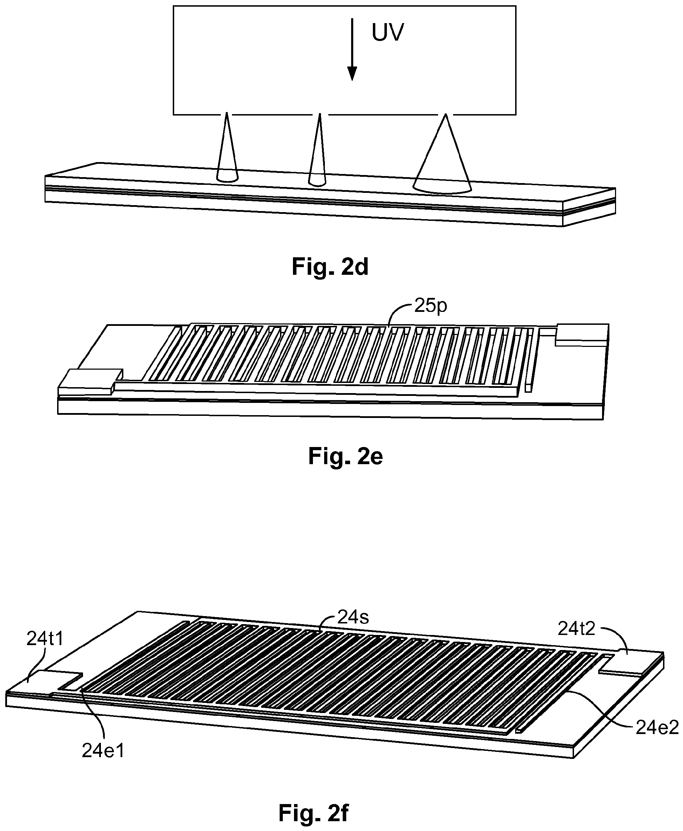

The photoresist 25 is patterned by photolithography (see Figure 2d) using an appropriate photolithography mask and an exposure light source, for example, a UV light source or an electron beam lithography equipment if one tends to decrease the process limit below few hundreds of nm. Figure 2e shows the developed patterned photoresist layer 25p. Based on the patterned photoresist layer 25p structuring of the electrode layer 24 can be performed.

The structuring of the electrode layer 24 can be realized, for example, by reactive ion etching or wet etching and results in the structured electrode layer 24s shown in Figure 2f. The structured electrode layer 24s comprises a pair of interdigitated electrodes 24e1 and 24e2 and respective electrode terminals 24t1 and 24t2. Thus, in the shown example the interdigitated electrodes 24e1 and 24e2 and the electrode terminals 24t1 and 24t2 are formed from the same electrode layer 24 and, therefore, in the same horizontal plane above the inorganic dielectric layer 22.

In a next processing step the patterned photoresist is stripped and the configuration can be cut in order to produce a die and the electrode terminals 24t1 and 24t2 can be used for wire bonding to a printed circuit board by means or suitable wires 26 that are, for example, made of gold as it is shown in Figure 2g. The printed circuit board comprises a measuring and control circuitry for processing the sensed data and controlling the humidity sensor device. The printed circuit board may comprise any on-chip circuits that carry out automatic calibration and signal processing to produce a relative humidity measurement. Particularly, the printed circuit board may comprise a temperature sensor for sensing the environmental temperature.

In the above-described manufacturing process flow no organic materials are involved that are damageable by relative high temperatures involved in the overall mass product manufacturing process. In-situ operation of the obtained humidity sensor device in relatively hot environments can, thus, be envisaged.

As it is illustrated in Figures 2a to 2g a humidity sensor device can be easily produced with a high yield by standard mass production semiconductor manufacturing techniques.

In the above-described embodiments the sensing element is formed on a semiconductor bulk substrate. However, alternatively it may be formed on an insulating substrate, for example, a ceramic substrate, in which case no additional dielectric layer as dielectric layer 22 shown in Figures 2a may be necessary, or over a semiconductor (sensing/acquisition) microcircuit (wafer), for example, an ASIC or ASSP, with an interposed dielectric (insulating) layer that may be made of silicon oxide, nitride or carbide. In these alternative embodiments reference signs 1 and 21 in the Figures represent the insulating substrate (with no dielectric layer 22 being present) or semiconductor microcircuit, respectively. The sensor element can be connected through vias formed in the dielectric (insulating) layer to the input stages of the circuit.

All previously discussed embodiments are not intended as limitations but serve as examples illustrating features and advantages of the invention. It is to be understood that some or all of the above described features can also be combined in different ways.

### Reference Numbers

- 10:: humidity sensor device
- 1, 21:: semiconductor bulk substrate
- 2, 23:: inorganic dielectric layer
- 3a, 3b, 24e1, 24e2:: interdigitated electrodes
- 3at and 3bt:: electrode terminals
- 4, 23:: adhesion layer
- 24:: electrode layer
- 24e1, 24e2:: electrode terminals
- 24s:: structured electrode layer
- 25:: photoresist
- 25p:: patterned photoresist
- 26:: wire

## Claims

1. Humidity sensor device, comprising
a substrate; and
at least a pair of interdigitated electrodes formed over the substrate.

2. The humidity sensor according to claim 1, wherein the substrate is one of a semiconductor bulk substrate, an insulating substrate and a semiconductor microcircuit.

3. The humidity sensor according to claim 2, wherein the substrate is the semiconductor bulk substrate or the semiconductor microcircuit and further comprising an inorganic dielectric layer formed on the semiconductor bulk substrate or the semiconductor microcircuit.

4. The humidity sensor device according to claim 3, wherein the semiconductor bulk substrate is made of or comprises silicon and/or the inorganic dielectric layer is made of or comprises a nitride material, in particular, Si₃N₄ and/or the interdigitated electrodes are made of or comprise a noble metal, in particular, gold.

5. The humidity sensor device according to one of the preceding claims, wherein the electrodes of the pair of interdigitated electrodes are arranged in the same horizontal plane parallel to the inorganic dielectric layer.

6. The humidity sensor device according to one of the preceding claims, further comprising a sensing circuit configured for measuring at least one of a resistance of the inorganic dielectric layer, impedance of the inorganic dielectric layer, capacity of the capacitor formed by the pair of interdigitated electrodes and inorganic dielectric layer and current flowing through the inorganic dielectric layer.

7. Method of manufacturing a humidity sensor device, comprising the steps of:
providing a substrate; and
forming a pair of interdigitated electrodes over the substrate.

8. The method according to claim 7, wherein the substrate is one of a semiconductor bulk substrate, an insulating substrate and a semiconductor microcircuit.

9. The method according to claim 8, wherein the substrate is the semiconductor bulk substrate or the semiconductor microcircuit and further comprising forming an inorganic dielectric layer on the semiconductor bulk substrate or the semiconductor microcircuit for absorbing/adsorbing water.

10. The method according to claim 9, further comprising forming an adhesion layer on the inorganic dielectric layer and wherein the pair of interdigitated electrodes is formed on the adhesion layer.

11. The method according to claim 9 or 10, wherein forming the pair of interdigitated electrodes comprises
forming an electrode layer over the inorganic dielectric layer;
forming a photoresist layer over the electrode layer;
providing a photolithography mask;
providing an exposure light source;
patterning the photoresist layer by means of the photolithography mask and the exposure light source to obtain a patterned photoresist; and
patterning the electrode layer by means of the patterned photoresist.

12. The method according to claim 11 wherein the patterning of the electrode layer comprises reactive ion etching or wet etching of the electrode layer.

13. The method according to claim 11 or 12, wherein the patterning of the electrode layer comprises forming an electrode terminal for each of the electrodes of the pair of interdigitated electrodes, respectively, that are, in particular, wire bonded to a printed circuit board.

14. The method according to one of the claims 8 to 13, wherein the semiconductor bulk substrate is made of or comprises silicon and/or the inorganic dielectric layer is made of or comprises a nitride material, in particular, Si₃N₄ and/or the interdigitated electrodes are made of or comprise a noble metal, in particular, gold.

15. Humidity sensor device obtainable by the method according to one of the claims 7 to 14.
